# EUROPEAN PATENT APPLICATION

(11) **EP 4 679 578 A1**
(43) Date of publication of application: **14.01.2026**
(21) Application number: 25186740.4
(22) Date of filing: 01.07.2025
(51) Int. Cl.: H01M 50/105, H01M 50/211, H01M 50/342

(54) **BATTERY MODULE**

(30) Priority: 12.07.2024 JP 2024112424
(71) Applicant: JTEKT CORPORATION, Kariya-shi, Aichi-ken, 448-8652 (JP)
(72) Inventor: KIKUYA, Kazunobu, Kariya-shi, Aichi-ken,, 448-8652 (JP)
(74) Representative: Winter, Brandl - Partnerschaft mbB

(57) **Abstract**

A battery module (1) includes: a pouch battery cell (2) including a battery portion (3) and an exterior member (4) that covers the battery portion (3); and an explosion-proof member (5). The explosion-proof member (5) includes: a plate portion (51) facing the pouch battery cell (2); and a protruding portion (52) that is provided to protrude from the plate portion (51) to break through the exterior member (4) when the pouch battery cell (2) is expanded. In the explosion-proof member (5), a first air passage (50) through which a gas discharged from an opening (40) formed in the exterior member (4) by the protruding portion (52) flows is provided in a part of the protruding portion (52) excluding a distal end (52f).

## Description

### BACKGROUND OF THE INVENTION

### 1. Field of the Invention

The present disclosure relates to a battery module including a pouch battery cell including an exterior member that covers a plurality of stacked electrode plates and an electrolyte solution.

### 2. Description of Related Art

A battery module including a secondary battery cell including an exterior member that covers a plurality of stacked electrode plates and an electrolyte solution has been used as, for example, a power supply for allowing a battery electric vehicle to travel. For example, when the secondary battery cell is brought to an overheating state due to temperature rise caused by over-charging or over-discharging, the electrolyte solution may vaporize to expand the secondary battery cell. Japanese Unexamined Patent Application Publication No. 2011-249428 (JP 2011-249428 A) and Japanese Unexamined Patent Application Publication No. 2003-168410 (JP 2003-168410 A) describe a configuration in which, in order to prevent the exterior member from being ruptured due to the inner pressure when the secondary battery cell is expanded as described above, a hole is made in the exterior member at the time of expansion of the secondary battery cell so that the inner pressure is reduced.

In an electricity storage module with an explosion-proof function described in JP 2011-249428 A, a stack plate is disposed between a plurality of electricity storage cells. The stack plate is provided with a cutting blade that tears a container by coming into contact with an outer edge part of the container expanded by inner pressure rise. The cutting blade is a plate-shaped member made of metal, and is fixed to the stack plate made of a resin material.

A battery module described in JP 2003-168410 A includes a battery in which battery elements such as a plurality of electrodes and an electrolyte are hermetically sealed with an exterior laminate, and a case that accommodates the battery. The case is provided with a protrusion for braking the exterior laminate when the battery is expanded. A through-hole communicating with the outside of the case is formed at a center portion of the protrusion.

### SUMMARY OF THE INVENTION

In a configuration in which the container of the electricity storage cell is torn by the cutting blade as in the configuration described in JP 2011-249428 A, even when a hole is made in the container, this hole may be closed by the cutting blade, and the inner pressure of the container may not be sufficiently reduced. Further, when the protrusion having the through-hole is provided in the case as in the configuration described in JP 2003-168410 A, in a case where a part of the exterior laminate is cut and becomes a cut piece at an opening peripheral edge of the through-hole in the protrusion, this cut piece may cause clogging in the through-hole, and the pressure in the exterior laminate may not be sufficiently reduced. Further, in the configuration described in JP 2003-168410 A, the through-hole is made at the distal end of the protrusion. Thus, the opening peripheral edge of the through-hole becomes a sharp acute angle, and the distal end of the protrusion is easily deformed. It may become difficult for the distal end of the protrusion to break through the exterior laminate.

In view of the above, the present disclosure provides a battery module that reduces, when a pouch battery including an exterior member that covers a plurality of stacked electrode plates and an electrolyte solution is expanded, an inner pressure of the exterior member with high certainty.

A battery module according to an aspect of the present disclosure includes: at least one pouch battery cell including a battery portion and an exterior member that covers the battery portion, the battery portion including a plurality of stacked electrode plates and an electrolyte solution; and an explosion-proof member that reduces an inner pressure of the exterior member when the pouch battery cell is expanded. The pouch battery cell includes a battery accommodating portion in which the battery portion is sandwiched by the exterior member, and a seal portion in which the exterior member is sealed around the battery accommodating portion. The explosion-proof member includes a plate portion facing at least the seal portion of the pouch battery cell, and a protruding portion that is provided to protrude from the plate portion to break through the exterior member when the pouch battery cell is expanded. A first air passage configured to cause a gas discharged from an opening formed in the exterior member by the protruding portion to flow is provided in the explosion-proof member. The first air passage is provided in a part of the protruding portion excluding a distal end.

With the present disclosure, when the pouch battery in which the stacked electrode plates and the electrolyte solution are covered with the exterior member is expanded, the inner pressure of the exterior member can be reduced with high certainty.

In the battery module according to the aspect of the present disclosure, the first air passage may include a second air passage provided in the protruding portion, and a third air passage provided in the plate portion. The second air passage in the protruding portion and the third air passage in the plate portion may be in communication with each other.

In the battery module according to the aspect of the present disclosure, the third air passage in the plate portion may pass through the plate portion.

In the battery module according to the aspect of the present disclosure, the pouch battery cell may be disposed on each of one surface side and another surface side of the plate portion of the explosion-proof member. The protruding portion may be provided on each of the one surface side and the other surface side of the plate portion. The second air passage in the protruding portion provided on the one surface side of the plate portion and the second air passage in the protruding portion provided on the other surface side of the plate portion may be in communication with each other through the third air passage in the plate portion.

In the battery module according to the aspect of the present disclosure, the protruding portion may include an inclined surface inclined with respect to the plate portion, and the first air passage may be provided in the inclined surface.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exterior view of a battery module according to an embodiment;
FIG. 2 is a sectional view of the battery module taken along the line II-II of FIG. 1;
FIG. 3 is a sectional view of the battery module taken along the line III-III of FIG. 1;
FIG. 4 is a sectional view schematically illustrating a structure example of a pouch battery cell;
FIG. 5 is an exploded perspective view of an assembled battery;
FIG. 6 is a perspective sectional view illustrating a part of the assembled battery;
FIG. 7A is a perspective view illustrating an intervention plate;
FIG. 7B is a perspective view illustrating the intervention plate;
FIG. 8 is an explanatory view illustrating a state in which a pouch battery cell is expanded;
FIG. 9 is a configuration view in which protruding portions provided in a plate portion are viewed from six directions;
FIG. 10A is a perspective view of protruding portions and a portion around the protruding portions including a cross section of the plate portion of the intervention plate taken along the line X-X of FIG. 9;
FIG. 10B is a perspective view of the protruding portions and the portion around the protruding portions including the cross section of the plate portion of the intervention plate taken along the line X-X of FIG. 9;
FIG. 11 is a perspective view illustrating a protruding portion according to Modification Example 1;
FIG. 12 is a perspective view illustrating a protruding portion according to Modification Example 2;
FIG. 13 is a perspective view illustrating a protruding portion according to Modification Example 3;
FIG. 14 is a perspective view illustrating a protruding portion according to Modification Example 4;
FIG. 15 is a perspective view illustrating a protruding portion according to Modification Example 5; and
FIG. 16 is a perspective view illustrating a protruding portion according to Modification Example 6.

### DETAILED DESCRIPTION OF EMBODIMENTS

### Embodiment

An embodiment of the present disclosure is described with reference to the drawings. It is to be noted that the embodiment and modification examples described below are represented as suitable specific examples for carrying out the present disclosure, and there are some parts that specifically exemplify various technically preferable technical matters, but the technical scope of the present invention is not limited to this specific aspect.

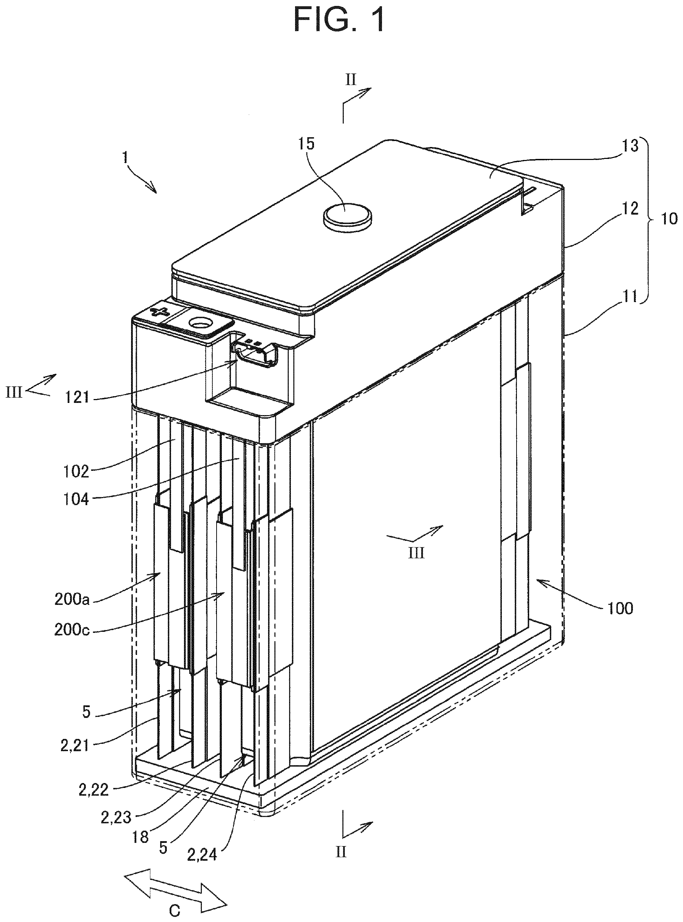

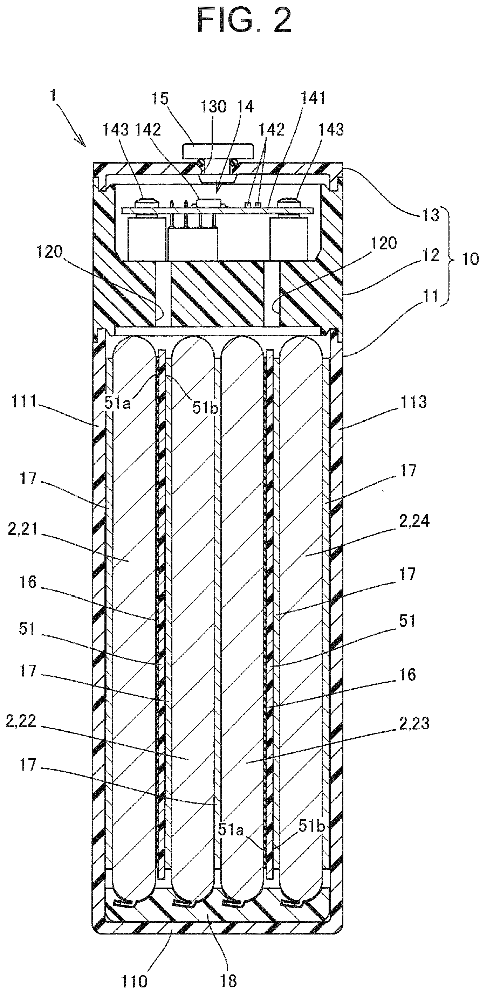

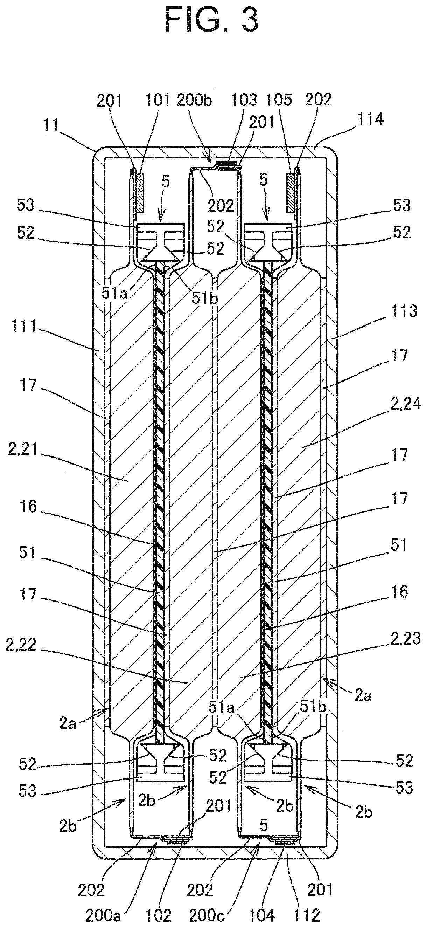

FIG. 1 is an exterior view of a battery module 1 according to the embodiment of the present disclosure. FIG. 2 is a sectional view of the battery module 1 taken along the line II-II of FIG. 1. FIG. 3 is a sectional view of the battery module 1 taken along the line III-III of FIG. 1. The battery module 1 is used as, for example, a power supply of a vehicle including an electric motor as a drive source for traveling.

The battery module 1 includes a case 10 that is made of resin and is obtained by combining first to third case members 11 to 13, an assembled battery 100 accommodated in the case 10, first to fifth bus bars 101 to 105, and a control circuit 14. The first to third case members 11 to 13 are made of, for example, a thermoplastic resin such as polybutylene terephthalate (PBT). The first case member 11 and the second case member 12 are airtightly welded, and the second case member 12 and the third case member 13 are airtightly welded.

The assembled battery 100 is accommodated in the first case member 11. In FIG. 1, the first case member 11 is indicated by the long dashed double-short dashed line, and the assembled battery 100 accommodated in the first case member 11 is indicated by the solid line. The assembled battery 100 includes a plurality of pouch battery cells 2. The control circuit 14 is accommodated in the second case member 12.

The control circuit 14 monitors the voltage of each of the pouch battery cells 2, and communicates with a host control device via a communication line connected to a connector portion 121 provided in the second case member 12. The control circuit 14 includes a substrate 141, and a plurality of electronic components 142 such as an IC, a resistor, and a capacitor mounted on the substrate 141. The substrate 141 is fixed to the second case member 12 by a plurality of bolts 143.

In the second case member 12, as illustrated in FIG. 2, a communication hole 120 that provides communication between an internal space of the first case member 11 and an internal space of the second case member 12 is provided. In the third case member 13, a through-hole 130 is provided, and the through-hole 130 is closed by a cap 15. The cap 15 prevents a foreign matter from entering inside of the case 10 from the through-hole 130. When a difference in air pressure between the inside and the outside of the case 10 is increased, air flows via the through-hole 130 to relax the air pressure difference.

In the present embodiment, the assembled battery 100 includes four pouch battery cells 2. The pouch battery cells 2 are each a secondary battery that can be charged and discharged. Each of the pouch battery cells 2 includes a positive electrode tab 201 and a negative electrode tab 202. The four pouch battery cells 2 are disposed in a disposing direction indicated by the arrow C in FIG. 1. This disposing direction corresponds to a width direction of the first case member 11. Hereinafter, when each of the four pouch battery cells 2 is described in an identified manner, the four pouch battery cells 2 are respectively referred to as first to fourth pouch battery cells 21 to 24. The first to fourth pouch battery cells 21 to 24 have the positive electrode tabs 201 and the negative electrode tabs 202 electrically connected in series.

The first bus bar 101 is connected to the positive electrode tab 201 of the first pouch battery cell 21. The second bus bar 102 is connected to a connecting portion 200a between the negative electrode tab 202 of the first pouch battery cell 21 and the positive electrode tab 201 of the second pouch battery cell 22. The third bus bar 103 is connected to a connecting portion 200b between the negative electrode tab 202 of the second pouch battery cell 22 and the positive electrode tab 201 of the third pouch battery cell 23. The fourth bus bar 104 is connected to a connecting portion 200c between the negative electrode tab 202 of the third pouch battery cell 23 and the positive electrode tab 201 of the fourth pouch battery cell 24. The fifth bus bar 105 is connected to the negative electrode tab 202 of the fourth pouch battery cell 24. Potentials of the first to fifth bus bars 101 to 105 are input to the control circuit 14.

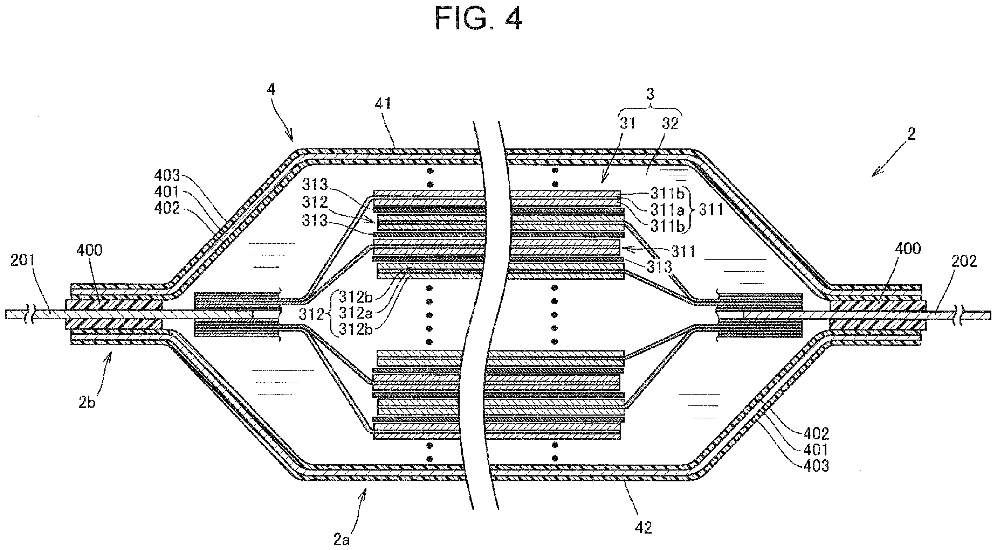

FIG. 4 is a sectional view schematically illustrating the structure example of the pouch battery cell 2. The pouch battery cell 2 is a lithium-ion secondary battery, more specifically, a lithium-ion capacitor, using lithium ions as electrolyte ions.

The pouch battery cell 2 includes the positive electrode tab 201 and the negative electrode tab 202, an electricity storage portion 31 that stores charges, an electrolyte solution 32 containing an organic solvent (a non-aqueous solvent) and an electrolyte, and an exterior member 4 that seals the electrolyte solution 32. The electricity storage portion 31 includes a plurality of positive electrode plates 311 and a plurality of negative electrode plates 312, and a plurality of separators 313. The positive electrode plates 311 and the negative electrode plates 312 are alternately disposed and stacked, and the separators 313 are disposed between the positive electrode plates 311 and the negative electrode plates 312. The positive electrode plates 311 and the negative electrode plates 312 are an example of a plurality of electrode plates of the present disclosure. The electricity storage portion 31 and the electrolyte solution 32 configure a battery portion 3 covered with the exterior member 4.

The positive electrode plate 311 includes a thin-plate-shaped current collector 311a, and a positive electrode active material layer 311b applied to both surfaces of the current collector 311a. The positive electrode active material layer 311b contains a positive electrode active material having a large specific surface area and a high electrical conductivity, and an electrically conductive auxiliary agent for use in enhancing an electrical conductivity of the positive electrode active material layer 311b. The negative electrode plate 312 includes a thin-plate-shaped current collector 312a, and a negative electrode active material layer 312b applied to both surfaces of the current collector 312a. The negative electrode active material layer 312b includes a negative electrode active material that can occlude and release lithium ions Li⁺. The negative electrode active material is pre-doped with lithium ions (Li⁺) at the time of production.

The electrolyte solution 32 is accommodated in the exterior member 4 together with the positive electrode plates 311, the negative electrode plates 312, and the separators 313, and is hermetically sealed in the exterior member 4. The positive electrode tab 201 is electrically connected to the current collector 311a of each of the positive electrode plates 311 in the exterior member 4. The negative electrode tab 202 is electrically connected to the current collector 312a of each of the negative electrode plates 312 in the exterior member 4. The positive electrode tab 201 and the negative electrode tab 202 are partially exposed to the outside of the exterior member 4. A thermal fusion resin 400 is interposed between the exterior member 4 and each of the positive electrode tab 201 and the negative electrode tab 202.

The exterior member 4 is configured of a laminate film including a center material sheet 401, an inner sheet 402 bonded to an inner surface of the center material sheet 401, and an outer sheet 403 bonded to an outer surface of the center material sheet 401. The center material sheet 401 is an aluminum foil. The inner sheet 402 is a resin sheet such as polypropylene. The outer sheet 403 is a resin sheet such as a nylon PET film.

Further, the exterior member 4 includes a front surface portion 41 and a back surface portion 42 that sandwich the battery portion 3, and the front surface portion 41 and the back surface portion 42 are thermally fused at a peripheral edge portion of the pouch battery cell 2. In the following description, a battery accommodating portion 2a refers to a portion in which the battery portion 3 is sandwiched between the front surface portion 41 and the back surface portion 42 of the exterior member 4, and a seal portion 2b refers to a portion in which the exterior member 4 is sealed around the battery accommodating portion 2a. The seal portion 2b hermetically seals the electrolyte solution 32 to prevent the electrolyte solution 32 from leaking to the outside of the exterior member 4.

For example, when the pouch battery cell 2 is brought to an overheating state due to temperature rise caused by over-charging or over-discharging, the electrolyte solution 32 may vaporize to expand the pouch battery cell 2. Further, when the expansion amount of the pouch battery cell 2 becomes excessive, the case 10 may be damaged, and hence the assembled battery 100 of the present embodiment includes an intervention plate 5 serving as an explosion-proof member that reduces the inner pressure of the exterior member 4 by making a hole in the exterior member 4 when the pouch battery cell 2 is expanded.

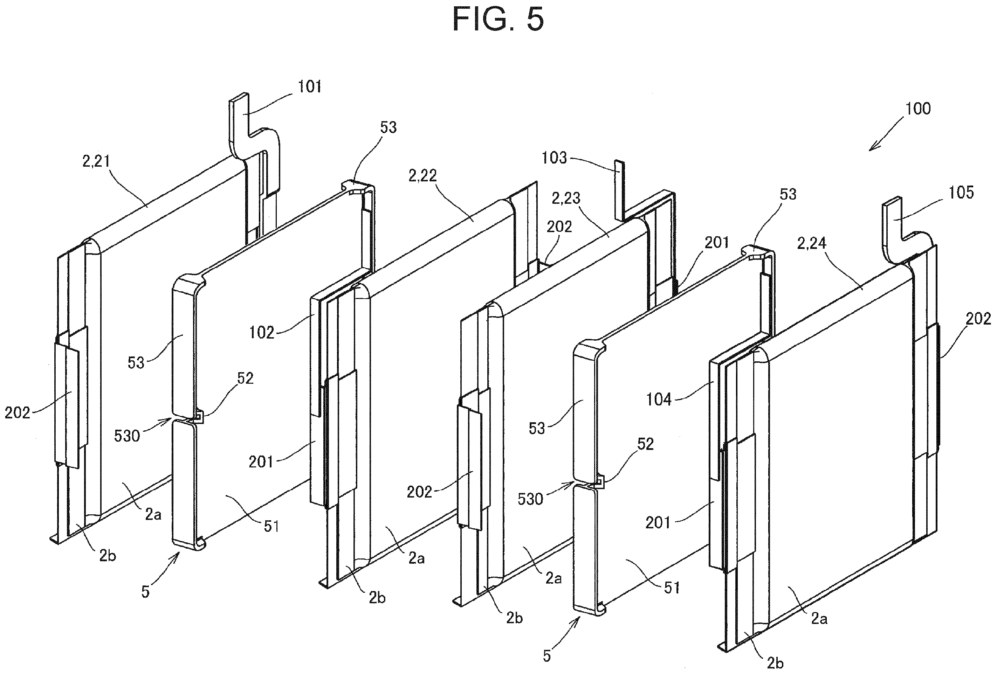

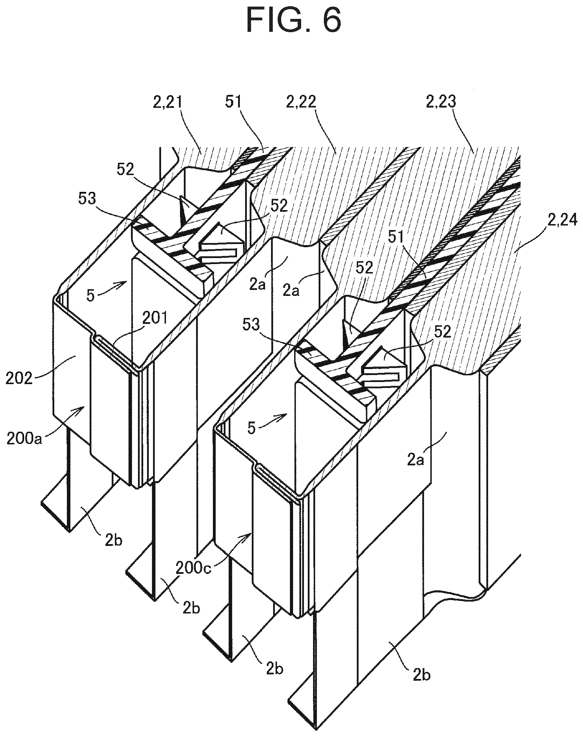

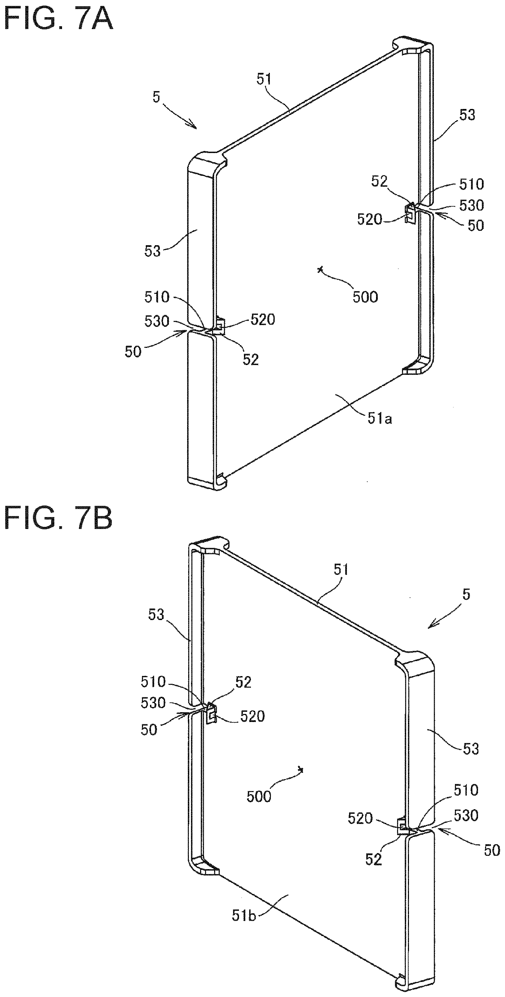

FIG. 5 is an exploded perspective view of the assembled battery 100. FIG. 6 is a perspective sectional view illustrating a part of the assembled battery 100. FIG. 7A and FIG. 7B are perspective views illustrating the intervention plate 5.

In the present embodiment, the intervention plate 5 is disposed between the first pouch battery cell 21 and the second pouch battery cell 22, and between the third pouch battery cell 23 and the fourth pouch battery cell 24. The intervention plate 5 is, for example, a resin molded member formed by injection molding. However, the intervention plate 5 is not limited to be made of resin, and may be made of, for example, metal.

The intervention plate 5 integrally includes a flat-plate-shaped plate portion 51, a plurality of protruding portions 52 provided to protrude from the plate portion 51, and an interval maintaining portion 53 provided at an end portion of the plate portion 51. The plate portion 51 has a rectangular shape of a size corresponding to the size of the pouch battery cell 2, and a part of the plate portion 51 faces the seal portion 2b of the pouch battery cell 2. That is, the plate portion 51 faces at least the seal portion 2b of the pouch battery cell 2. In the present embodiment, a direction in which the positive electrode tab 201 and the negative electrode tab 202 are disposed side by side in the pouch battery cell 2 is a longitudinal direction of the plate portion 51, and both end portions of the plate portion 51 in the longitudinal direction face the seal portion 2b of the pouch battery cell 2. However, as the shape of the plate portion 51, a direction in which the positive electrode tab 201 and the negative electrode tab 202 are disposed side by side may be a transverse direction.

The plate portion 51 of the intervention plate 5 provided between the first pouch battery cell 21 and the second pouch battery cell 22 has one surface 51a that faces the seal portion 2b of the first pouch battery cell 21, and another surface 51b that faces the seal portion 2b of the second pouch battery cell 22. The plate portion 51 of the intervention plate 5 provided between the third pouch battery cell 23 and the fourth pouch battery cell 24 has one surface 51a that faces the seal portion 2b of the third pouch battery cell 23, and another surface 51b that faces the seal portion 2b of the fourth pouch battery cell 24.

The protruding portions 52 are provided to protrude from the one surface 51a and the other surface 51b of the plate portion 51, in the plate portion 51 in parts that face the seal portions 2b of the first to fourth pouch battery cells 21 to 24. On the one surface 51a side of the plate portion 51, the protruding portions 52 are provided at two portions sandwiching the battery accommodating portion 2a in a direction parallel with the plate portion 51. On the other surface 51b side of the plate portion 51 as well, similarly, the protruding portions 52 are provided at two portions sandwiching the battery accommodating portion 2a in the direction parallel with the plate portion 51.

It is to be noted that the number of protruding portions 52 in the intervention plate 5 is not limited thereto, and one protruding portion 52 may be provided on each of the one surface 51a side and the other surface 51b side of the plate portion 51, or three or more protruding portions 52 may be provided on each of the one surface 51a side and the other surface 51b side of the plate portion 51. However, it is desired that the protruding portions 52 be provided at least at two portions on each of the one surface 51a side and the other surface 51b side of the plate portion 51 so that the gas in the exterior member 4 can be reliably discharged when the pouch battery cell 2 is expanded.

In the present embodiment, two protruding portions 52 are provided on each of the one surface 51a side and the other surface 51b side of the plate portion 51, at positions symmetrical with respect to a center position 500 (see FIG. 7A and FIG. 7B) disposed side by side to a center portion of the battery accommodating portion 2a along a direction in which the pouch battery cells 2 are disposed side by side.

The interval maintaining portion 53 maintains an interval between the seal portions 2b of the two pouch battery cells 2 sandwiching the intervention plate 5. More specifically, the interval maintaining portion 53 of one intervention plate 5 out of the two intervention plates 5 of the assembled battery 100 disposed to be intervened between the first pouch battery cell 21 and the second pouch battery cell 22 maintains the interval between the seal portion 2b of the first pouch battery cell 21 and the seal portion 2b of the second pouch battery cell 22. The interval maintaining portion 53 of the other intervention plate 5 disposed to be intervened between the third pouch battery cell 23 and the fourth pouch battery cell 24 maintains the interval between the seal portion 2b of the third pouch battery cell 23 and the seal portion 2b of the fourth pouch battery cell 24.

The interval maintaining portion 53 is provided at a position farther than the protruding portions 52 from the center position 500 of the plate portion 51. In the present embodiment, the interval maintaining portion 53 is provided at each of both end portions of the rectangular plate portion 51 in the long-side direction. The protruding portion 52 is provided in the vicinity of the interval maintaining portion 53, and the contact between the exterior member 4 and the protruding portion 52 when the pouch battery cell 2 is not expanded is prevented by the interval maintaining portion 53.

The one intervention plate 5 is fixed to the first pouch battery cell 21, and the other intervention plate 5 is fixed to the third pouch battery cell 23. In the present embodiment, as illustrated in FIG. 3, the plate portion 51 of the one intervention plate 5 is fixed to the exterior member 4 of the first pouch battery cell 21 with a double-sided tape 16, and the plate portion 51 of the other intervention plate 5 is fixed to the exterior member 4 of the third pouch battery cell 23 with a double-sided tape 16.

The first case member 11 that accommodates the assembled battery 100 has, as illustrated in FIG. 2 and FIG. 3, a cuboid shape including a bottom wall portion 110 and four side wall portions 111 to 114, and the assembled battery 100 is disposed between a pair of side wall portions 111, 113. The side wall portions 111, 113 face each other in the direction in which the first to fourth pouch battery cells 21 to 24 are disposed side by side. A sheet-shaped spacer 17 is disposed between the first pouch battery cell 21 and the side wall portion 111, between the one intervention plate 5 and the second pouch battery cell 22, between the second pouch battery cell 22 and the third pouch battery cell 23, between the other intervention plate 5 and the fourth pouch battery cell 24, and between the fourth pouch battery cell 24 and the side wall portion 113.

At a bottom portion of the first case member 11, a support plate 18 that supports the first to fourth pouch battery cells 21 to 24 is disposed in contact with the bottom wall portion 110. The support plate 18 has grooves formed to accommodate parts of the respective seal portions 2b of the first to fourth pouch battery cells 21 to 24.

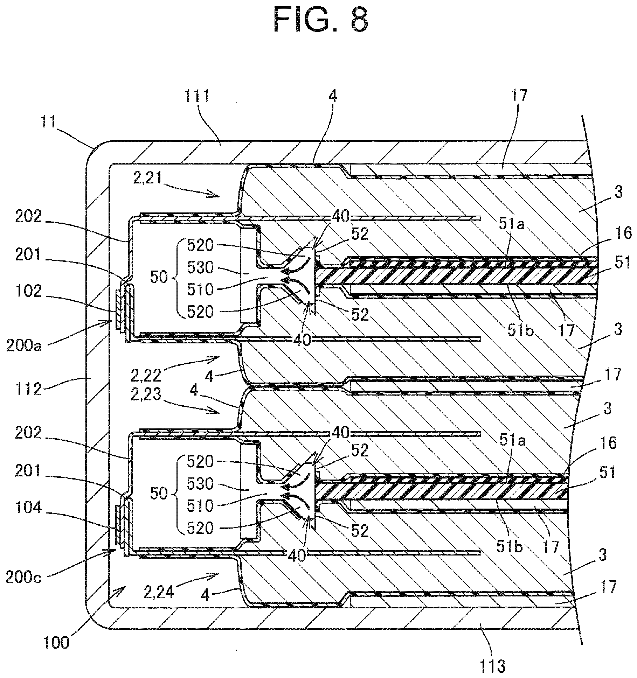

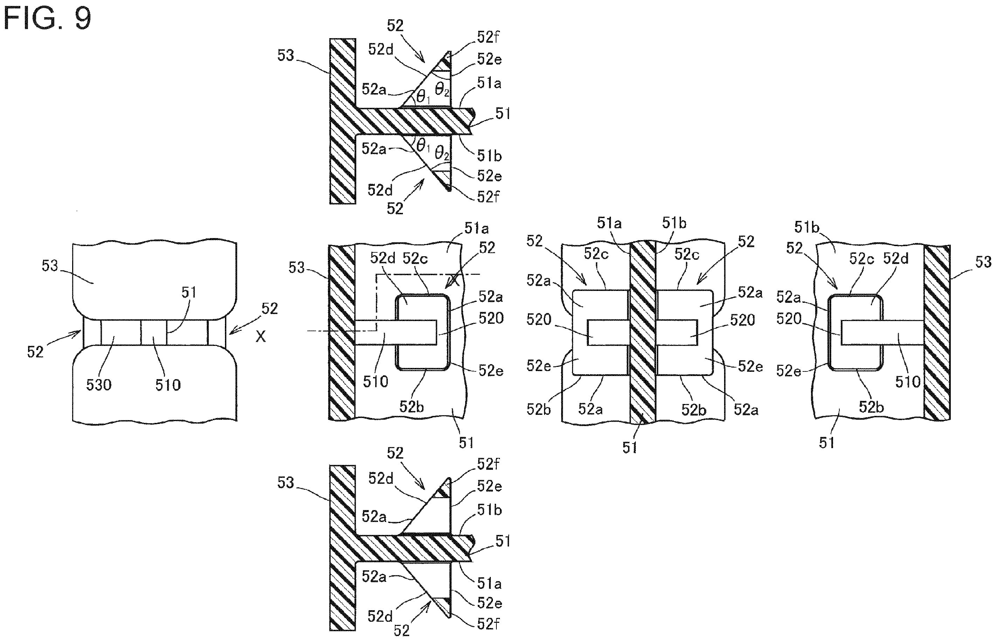

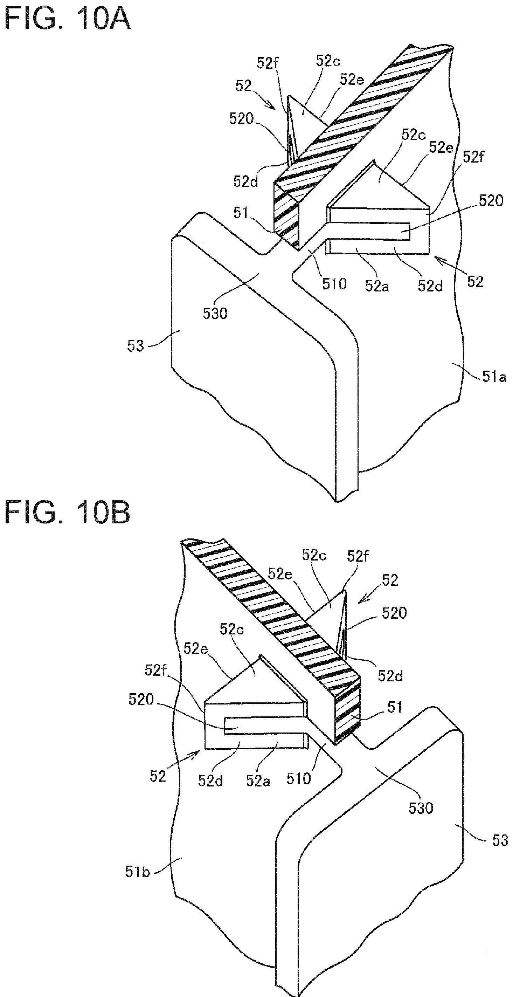

FIG. 8 is an explanatory view illustrating a state of the assembled battery 100 in the case 10 when the pouch battery cell 2 is expanded. The protruding portion 52 breaks through the exterior member 4 when the pouch battery cell 2 is expanded to discharge a gas generated in the exterior member 4 and reduce the inner pressure of the exterior member 4. The intervention plate 5 has an air passage 50 (a first air passage) through which a gas discharged from an opening 40 formed in the exterior member 4 by the protruding portion 52 flows. The air passage 50 is formed across the protruding portion 52, the plate portion 51, and the interval maintaining portion 53. Hereinafter, the air passage 50 in the protruding portion 52 is referred to as a protruding portion air passage 520 (a second air passage), and the air passage 50 in the plate portion 51 is referred to as a plate portion air passage 510 (a third air passage). Further, the air passage 50 in the interval maintaining portion 53 is referred to as an interval maintaining portion air passage 530. The protruding portion air passage 520, the plate portion air passage 510, and the interval maintaining portion air passage 530 are each a part of the air passage 50. Next, with reference to FIG. 9, FIG. 10A, and FIG. 10B, description is given in details of the configuration of the protruding portions 52 and a portion around the protruding portions 52.

FIG. 9 is a configuration view in which the protruding portions 52 provided on the one surface 51a side and the other surface 51b side of the plate portion 51 are viewed from six directions. FIG. 10A and FIG. 10B are perspective views of the protruding portions 52 and the portion around the protruding portions 52 including a cross section of the plate portion 51 taken along the line X-X of FIG. 9.

The shape of the protruding portion 52 as viewed from the longitudinal direction of the interval maintaining portion 53 along the short side direction of the plate portion 51 is a right triangle shape. A side surface 52a of the protruding portion 52 includes a pair of flat surfaces 52b, 52c having a right triangle shape and being perpendicular to the short side direction of the plate portion 51, an inclined surface 52d corresponding to the hypotenuse of the right triangle shape, and a perpendicular surface 52e corresponding to the opposite side of the right triangle shape. The flat surfaces 52b, 52c and the perpendicular surface 52e are perpendicular to the one surface 51a and the other surface 51b of the plate portion 51. The inclined surface 52d is inclined with respect to the one surface 51a and the other surface 51b of the plate portion 51.

As illustrated in FIG. 9, as viewed from the longitudinal direction of the interval maintaining portion 53, an inclination angle θ₁ of the inclined surface 52d with respect to the one surface 51a and the other surface 51b of the plate portion 51 and an inclination angle θ₂ of the inclined surface 52d with respect to the perpendicular surface 52e are each, for example, 45°. However, the present disclosure is not limited thereto, and, for example, the inclination angles θ₁, θ₂ may be 30° or more and 60° or less. When the pouch battery cell 2 is expanded, the exterior member 4 is pressed against a distal end 52f of the protruding portion 52 due to the inner pressure of the exterior member 4, and the opening 40 is formed in the exterior member 4 as illustrated in FIG. 8. The opening 40 is a part of the exterior member 4 torn by the distal end 52f of the protruding portion 52 having an acute angle.

The protruding portion air passage 520 is formed in a part of the protruding portion 52 excluding the distal end 52f. In other words, the protruding portion air passage 520 is not formed in the distal end 52f of the protruding portion 52. With this configuration, when the pouch battery cell 2 is expanded and the exterior member 4 is pressed against the distal end 52f of the protruding portion 52 to be torn, and the opening 40 of the exterior member 4 passes the distal end 52f of the protruding portion 52, the gas in the exterior member 4 flows into the protruding portion air passage 520. The gas that has flowed into the protruding portion air passage 520 flows through the plate portion air passage 510 and the interval maintaining portion air passage 530, and further flows through the communication hole 120 of the second case member 12 and the through-hole 130 of the third case member 13 to be released to the outside of the case 10. In this manner, in the present embodiment, the gas in the exterior member 4 can be smoothly and quickly released to the protruding portion air passage 520 without the opening 40 of the exterior member 4 formed by the protruding portion 52 being closed by the protruding portion 52 itself.

Further, in the present embodiment, the protruding portion air passage 520 is provided in the inclined surface 52d and the perpendicular surface 52e of the protruding portion 52, and is formed in a range to reach the plate portion 51. Accordingly, the gas in the exterior member 4 is released to the protruding portion air passage 520 from a part in which the protruding portion air passage 520 is provided in the inclined surface 52d and the perpendicular surface 52e, and flows to the plate portion 51 side.

In the plate portion 51, the plate portion air passage 510 communicating with the protruding portion air passage 520 is formed to pass through the plate portion 51 in the thickness direction of the plate portion 51. Further, in the present embodiment, the protruding portion air passage 520 of the protruding portion 52 provided on the one surface 51a side of the plate portion 51 and the protruding portion air passage 520 of the protruding portion 52 provided on the other surface 51b side are in communication with each other through the plate portion air passage 510 formed in the plate portion 51. However, the plate portion air passage 510 is not always required to be formed to pass through the plate portion 51. For example, with the use of a groove formed in the one surface 51a and the other surface 51b of the plate portion 51, the plate portion air passage 510 communicating with the protruding portion air passage 520 may be formed in the plate portion 51.

### Effects of Embodiment

In the embodiment described above, the protruding portion air passage 520 is formed in a part of the protruding portion 52 excluding the distal end 52f, and hence the opening 40 of the exterior member 4 is prevented from being closed by the protruding portion 52, and the gas in the exterior member 4 can be smoothly discharged to the outside of the case 10 when the pouch battery cell 2 is expanded. Further, in the present embodiment, the interval maintaining portion air passage 530 communicating with the plate portion air passage 510 is formed in the interval maintaining portion 53, and hence, as illustrated in FIG. 8, even when the exterior member 4 is brought into contact with the plate portion 51 around the protruding portion 52, the gas in the exterior member 4 can be discharged by the air passage 50. Still further, in the present embodiment, the protruding portion air passage 520 is formed in a part of the protruding portion 52 excluding the distal end 52f, and hence the strength of the distal end 52f of the protruding portion 52 can be ensured to a level that is sufficient for breaking through the exterior member 4. In this manner, the inner pressure of the exterior member 4 can be reduced with high certainty.

### Modification Examples

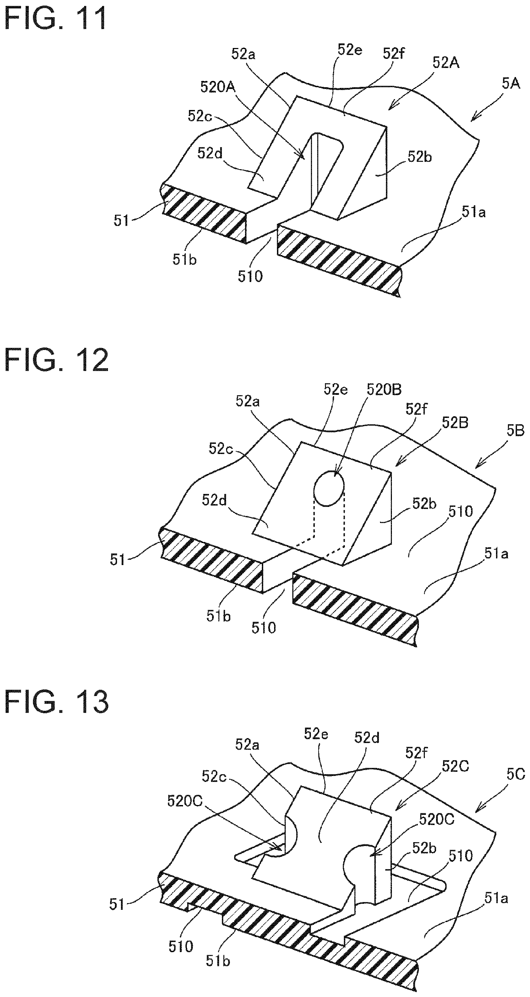

Next, modification examples of the embodiment are described with reference to FIG. 11 to FIG. 16. These modification examples are examples obtained by deforming the shape of the protruding portion 52 of the intervention plate 5 according to the embodiment. FIG. 11 to FIG. 16 illustrate the protruding portion provided on the one surface 51a side of the plate portion 51 and a portion around the protruding portion, but a similar protruding portion is formed also on the other surface 51b side of the plate portion 51. Further, in FIG. 11 to FIG. 16, the illustration of the interval maintaining portion 53 is omitted.

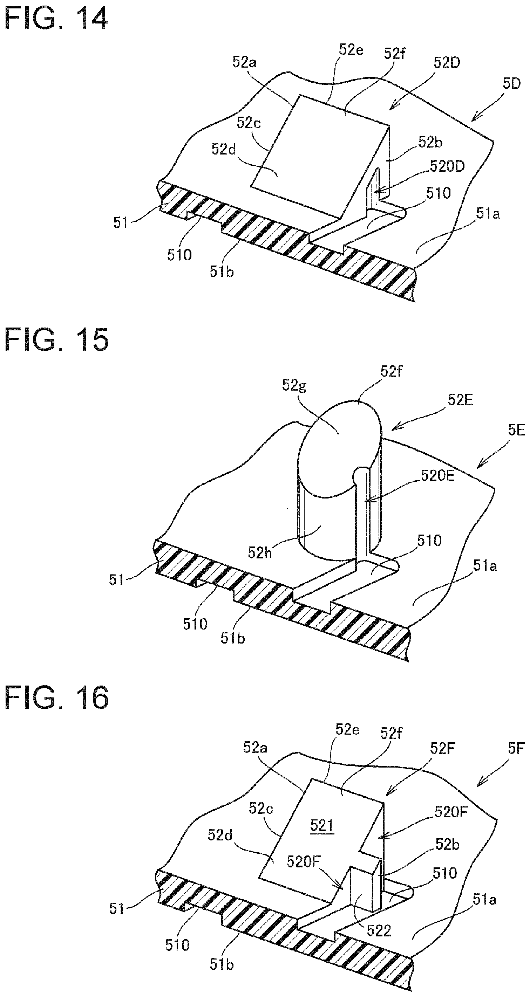

FIG. 11 is a perspective view illustrating a part of an intervention plate 5A including a protruding portion 52A according to Modification Example 1. FIG. 12 is a perspective view illustrating a part of an intervention plate 5B including a protruding portion 52B according to Modification Example 2. FIG. 13 is a perspective view illustrating a part of an intervention plate 5C including a protruding portion 52C according to Modification Example 3. FIG. 14 is a perspective view illustrating a part of an intervention plate 5D including a protruding portion 52D according to Modification Example 4.

In each of the protruding portions 52A, 52B, 52C, 52D, similarly to the protruding portion 52 according to the embodiment, a shape as viewed from the transverse direction of the plate portion 51 is a right triangle shape. The side surface 52a of each of the protruding portions 52A, 52B, 52C, 52D includes, similarly to the above-mentioned embodiment, the pair of flat surfaces 52b, 52c having a right triangle shape, the inclined surface 52d, and the perpendicular surface 52e, but a part in which the protruding portion air passage is formed is different. The plate portion air passage 510 formed in the plate portion 51 of each of the intervention plates 5A, 5B, 5C, 5D communicates with, similarly to the above-mentioned embodiment, the interval maintaining portion air passage 530 formed in the interval maintaining portion 53.

In Modification Example 1 illustrated in FIG. 11, a protruding portion air passage 520A is formed in the inclined surface 52d of the protruding portion 52A. The protruding portion air passage 520A is formed in a range from the vicinity of the distal end 52f of the protruding portion 52A to reach the plate portion 51, and communicates with the plate portion air passage 510 formed to pass through the plate portion 51, but the protruding portion air passage 520A is not formed in the perpendicular surface 52e and the distal end 52f of the protruding portion 52A.

In Modification Example 2 illustrated in FIG. 12, a protruding portion air passage 520B is made in the inclined surface 52d of the protruding portion 52B. The protruding portion air passage 520B is a through-hole passing through the protruding portion 52B in a direction perpendicular to the plate portion 51, and is made at a portion separated from the distal end 52f of the protruding portion 52A. The protruding portion air passage 520B is not formed in the distal end 52f of the protruding portion 52B. The protruding portion air passage 520B communicates with the plate portion air passage 510 formed to pass through the plate portion 51.

In Modification Example 3 illustrated in FIG. 13, a protruding portion air passage 520C is formed in each of the flat surfaces 52b, 52c of the protruding portion 52C. The two protruding portion air passages 520C are made in the inclined surface 52d at center portions in the height direction of the protruding portion 52C perpendicular to the plate portion 51, and are formed in a range to reach the plate portion 51 along the direction perpendicular to the plate portion 51. The plate portion air passage 510 communicating with each of the protruding portion air passages 520C is formed in a groove shape in the one surface 51a of the plate portion 51.

In Modification Example 4 illustrated in FIG. 14, a groove-shaped protruding portion air passage 520D is formed in one flat surface 52b out of the flat surfaces 52b, 52c of the protruding portion 52D. The protruding portion air passage 520D is not made in the inclined surface 52d, and the protruding portion air passage 520D is not formed in the distal end 52f of the protruding portion 52D. The protruding portion air passage 520D is formed in a range from the vicinity of the inclined surface 52d to reach the plate portion 51, and communicates with the groove-shaped plate portion air passage 510 formed in the one surface 51a of the plate portion 51.

FIG. 15 is a perspective view illustrating a part of an intervention plate 5E including a protruding portion 52E according to Modification Example 5. The protruding portion 52E has a columnar shape provided perpendicular to the plate portion 51, and a distal end surface 52g thereof is a flat surface inclined with respect to the center axis of the protruding portion 52E. In a side surface 52h of the protruding portion 52E, a protruding portion air passage 520E is formed in parallel with the center axis of the protruding portion 52E. The protruding portion air passage 520E is formed in a range from the distal end surface 52g to reach the plate portion 51. In the one surface 51a of the plate portion 51, the plate portion air passage 510 communicating with the protruding portion air passage 520E is formed in a groove shape. The distal end surface 52g has an oval shape, and one end in the major axis direction is the distal end 52f of the protruding portion 52E, but the protruding portion air passage 520E is not formed in the distal end 52f of the protruding portion 52E.

FIG. 16 is a perspective view illustrating a part of an intervention plate 5F including a protruding portion 52F according to Modification Example 6. In the protruding portion 52F, similarly to the above-mentioned embodiment, a shape as viewed from the transverse direction of the plate portion 51 is a right triangle shape, and includes the flat surfaces 52b, 52c perpendicular to the transverse direction of the plate portion 51, the inclined surface 52d, and the perpendicular surface 52e, but two protruding portion air passages 520F are formed by cutouts formed in one flat surface 52b. Each of the protruding portion air passages 520F is formed at a corner portion of the protruding portion 52F so as to be dent from the one flat surface 52b to the other flat surface 52c side, and is made in the inclined surface 52d. A part between the two protruding portion air passages 520F in the protruding portion 52F is a projecting portion 522 projecting from a main body portion 521 including the flat surface 52c having the right triangle shape, the inclined surface 52d, and the perpendicular surface 52e. The protruding portion air passage 520F is formed in a range from the inclined surface 52d to reach the plate portion 51, and communicates with the groove-shaped plate portion air passage 510 formed in the one surface 51a of the plate portion 51.

Even with these modification examples, the opening 40 of the exterior member 4 is prevented from being closed by the protruding portions 52A to 52F, and the gas in the exterior member 4 can be smoothly discharged to the outside of the case 10 when the pouch battery cell 2 is expanded. Further, the inner pressure of the exterior member 4 can be reduced with high certainty.

### Supplement

The present disclosure has been described above based on the embodiment and the modification examples, but the embodiment and the modification examples do not limit the disclosure according to the scope of claims. Further, it should be noted that all of combinations of the features described in the embodiment and the modification examples are not limited to be essential for means for solving the problem of the disclosure. Further, in the present disclosure, it is possible to omit a partial configuration in a range not departing from the gist of the present disclosure, or to add or replace a configuration to modify and carry out the present disclosure as appropriate. In addition, for example, the present disclosure can be modified as follows.

In the above-mentioned embodiment, description has been given of a case where the present disclosure is applied to a lithium-ion capacitor that can perform charging and discharging at a speed higher than a general lithium-ion battery, but the present disclosure is not limited thereto, and the present disclosure can be applied to a lithium-ion battery or secondary battery cells having other configurations. Further, the battery module 1 and the assembled battery 100 are not limited to on-board members, and can be used for various applications.

Further, in the above-mentioned embodiment, description has been given of a case where the assembled battery 100 includes four pouch battery cells 2, but the configuration of the assembled battery 100 is not limited thereto. For example, a configuration in which one intervention plate 5 is disposed between two pouch battery cells 2 may be employed. Further, the present disclosure is applicable to a case that accommodates a single pouch battery cell 2, and the case may be used as the explosion-proof member.

Further, in the above-mentioned embodiment, description has been given of a case where the protruding portion 52 has a right triangle shape, but the shape of the protruding portion of the present disclosure is not limited thereto. As long as the protruding portion has a shape that can break through the exterior member 4, various shapes such as a conical shape can be adopted.

## Claims

1. A battery module (1) **characterized by** comprising:
at least one pouch battery cell (2) including a battery portion (3) and an exterior member (4) that covers the battery portion (3), the battery portion (3) including a plurality of stacked electrode plates and an electrolyte solution; and
an explosion-proof member (5) that reduces an inner pressure of the exterior member (4) when the pouch battery cell (2) is expanded, wherein:
the pouch battery cell (2) includes a battery accommodating portion (2a) in which the battery portion (3) is sandwiched by the exterior member (4), and a seal portion (2b) in which the exterior member (4) is sealed around the battery accommodating portion (2a);
the explosion-proof member (5) includes a plate portion (51) facing at least the seal portion (2b) of the pouch battery cell (2), and a protruding portion (52) that is provided to protrude from the plate portion (51) to break through the exterior member (4) when the pouch battery cell (2) is expanded;
a first air passage (50) configured to cause a gas discharged from an opening (40) formed in the exterior member (4) by the protruding portion (52) to flow is provided in the explosion-proof member (5); and
the first air passage (50) is provided in a part of the protruding portion (52) excluding a distal end (52f).

2. The battery module (1) according to claim 1, **characterized in that**:
the first air passage (50) includes a second air passage (520) provided in the protruding portion, and a third air passage (510) provided in the plate portion (51); and
the second air passage (520) in the protruding portion (52) and the third air passage (510) in the plate portion (51) are in communication with each other.

3. The battery module (1) according to claim 2, **characterized in that** the third air passage (510) in the plate portion (51) passes through the plate portion (51).

4. The battery module (1) according to claim 3, **characterized in that**:
the pouch battery cell (2) is disposed on each of one surface side and another surface side of the plate portion (51) of the explosion-proof member (5);
the protruding portion (52) is provided on each of the one surface side and the other surface side of the plate portion (51); and
the second air passage (520) in the protruding portion (52) provided on the one surface side of the plate portion (51) and the second air passage (520) in the protruding portion (52) provided on the other surface side of the plate portion (51) are in communication with each other through the third air passage (510) in the plate portion (51).

5. The battery module (1) according to claim 1, **characterized in that**:
the protruding portion (52) includes an inclined surface (52d) inclined with respect to the plate portion (51); and
the first air passage (50) is provided in the inclined surface (52d).
